(19) Europäisches Patentamt
European Patent Office
Office européen des brevets

(11) Veröffentlichungsnummer: **0 261 517 A2**

(12) # EUROPÄISCHE PATENTANMELDUNG

(21) Anmeldenummer: **87113295.7**

(51) Int. Cl.[4]: **C08L 83/04** , C07F 7/02

(22) Anmeldetag: **11.09.87**

(30) Priorität: **12.09.86 DE 3631125**

(43) Veröffentlichungstag der Anmeldung:
**30.03.88 Patentblatt 88/13**

(84) Benannte Vertragsstaaten:
**AT BE CH DE FR GB IT LI NL SE**

(71) Anmelder: **WACKER-CHEMIE GMBH**
**Prinzregentenstrasse 22**
**D-8000 München 22(DE)**

(72) Erfinder: **Pradl, Ferdinand, Dr. Dipl.-Chem.**
**Marktlerstrasse 84**
**D-8263 Burghausen(DE)**
Erfinder: **Weise, Carlos, Dr. Dipl.-Chem.**
**Brucknerstrasse 41 b**
**D-8263 Burghausen(DE)**
Erfinder: **Wegehaupt, Karl-Heinrich, Dr. Dipl.-Chem.**
**Marktlerstrasse 78**
**D-8263 Burghausen(DE)**

(54) **Verfahren zur Herstellung von Organopolysiloxanelastomeren und neue Organosiliciumverbindungen.**

(57) Verfahren zur Herstellung von Organopolysiloxanelastomeren durch Vernetzen von durch Anlagerung von Si-gebundenem Wasserstoff an SiC-gebundene Vinylgruppen vernetzbare Massen, die einen Zusatz (a) zur Verbesserung der Haftung der Elastomeren auf den Unterlagen, auf denen sie erzeugt wurden, enthalten, wobei diese Massen als mindestens einen Teil eines derartigen Zusatzes (a) mindestens eine Verbindung enthalten, die aus der Gruppe von in den Patentansprüchen näher definierten Verbindungen ausgewählt ist.

Es werden auch einzelne Organosiliciumverbindungen dieser Art beansprucht.

EP 0 261 517 A2

## Verfahren zur Herstellung von Organopolysiloxanelastomeren und neue Organosiliciumverbindungen

Verfahren zur Herstellung von Organopolysiloxanelastomeren durch Vernetzen von durch Anlagerung von Si-gebundenem Wasserstoff an SiC-gebundene Vinylgruppen vernetzbaren Massen, die einen Zusatz zur Verbesserung der Haftung der Elastomeren auf den Unterlagen, auf denen sie erzeugt wurden, enthalten, sind bereits bekannt. Hierzu sei z.B. auf CA 11 80 482 (ausgegeben 2. Januar 1985, J.Th. Keating, General Electric Company) verwiesen.

Es ist Aufgabe der Erfindung, ein Verfahren zur Herstellung von Organopolysiloxanelastomeren durch Vernetzung von durch Anlagerung von Si-gebundenem Wasserstoff an SiC-gebundene Vinylgruppen vernetzbaren Massen, die einen Zusatz zur Verbesserung der Haftung der Elastomeren auf den Unterlagen, auf denen sie erzeugt wurden, enthalten, bereitzustellen, das Elastomere ergibt,die auf einer besonders großen Zahl von Arten von Unterlagen, auf denen sie erzeugt wurden, auch ohne vorhergehende Grundierung der Unterlagen gut haften, wobei derartige Zusätze vielfach nicht oder nur wenig flüchtig und zumindest verhältnismäßig wenig toxisch sind und wobei die Elastomeren auf den Unterlagen, auf denen sie erzeugt wurden, auch dann ohne vorhergehende Grundierung der Unterlagen vielfach gut haften, wenn die Vernetzung bei Temperaturen unterhalb 80°C, also z.B. bei 15°C bis 40°C, erfolgte. Diese Aufgabe wird durch die Erfindung gelöst.

Gegenstand der Erfindung ist ein Verfahren zur Herstellung von Organopolysiloxanelastomeren durch Vernetzen von durch Anlagerung von Si-gebundenem Wasserstoff an SiC-gebundene Vinylgruppen vernetzbaren Massen, die einen Zusatz (a) zur Verbesserung der Haftung der Elastomeren auf den Unterlagen, auf denen sie erzeugt wurden, enthalten, dadurch gekennzeichnet, daß diese Massen als mindestens einen Teil eines derartigen Zusatzes (a) mindestens eine Verbindung enthalten, die aus folgender Gruppe von Verbindungen ausgewählt ist:

(1) Verbindungen der Formel

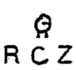 (I),

worin R ein einwertiger Kohlenwasserstoffrest mit 1 bis 20 Kohlenstoffatomen je Rest ist und Z die gleiche Bedeutung wie R hat oder Wasserstoff oder die Gruppe -OR bedeutet, wobei R die vorstehend dafür angegebene Bedeutung hat, wobei in diesen Verbindungen je Molekül mindestens eine aliphatische Kohlenstoff-Kohlenstoff-Doppelbindung vorliegt, während andere aliphatische Kohlenstoff-Kohlenstoff-Bindungen als aliphatische Kohlenstoff-Kohlenstoff-Doppelbindungen einfache Bindungen sind, und wenn Z nicht Wasserstoff ist oder nicht die gleiche Bedeutung wie R hat, die Kohlenwasserstoffreste R und/oder Z als Substituenten mindestens einen solchen aufweisen, der aus folgender Gruppe von Formeln ausgewählt ist:

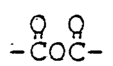 .

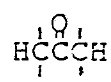

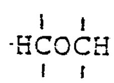

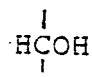

-CN

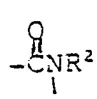

($R^2$ = Wasserstoff oder ein einwertiger Kohlenwasserstoffrest mit 1 bis 20 Kohlenstoffatomen je Rest)

(2) Verbindungen der Formel

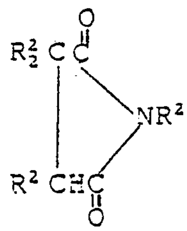

(II),

worin $R^2$ die oben dafür angegebene Bedeutung hat, oder beide an das gleiche Kohlenstoffatom gebundene $R^2$ zusammen einen über eine Kohlenstoff-Kohlenstoff-Doppelbindung an dieses Kohlenstoffatom gebundenen Kohlenswasserstoffrest darstellen.

(3) Verbindungen der Formel

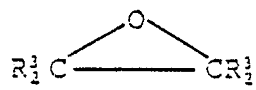

(III),

worin $R^3$ Wasserstoff oder gleiche oder verschiedene Kohlenwasserstoffreste bedeutet, die zweiwertig sind, wenn sie miteinander einen Ring bilden, und sonst einwertig sind, und die durch mindestens einen Substituenten substituiert sein können, der aus folgender Gruppe von Formeln ausgewählt ist:

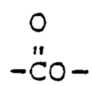

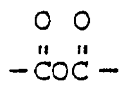

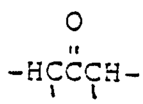

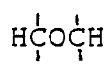

-CN

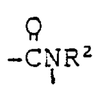

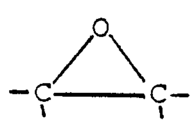

—Cl

—F

—Br

—J

($R^2$ hat die oben dafür angegebene Bedeutung) und wobei mindestens eine Kohlenstoff-Kohlenstoff-Doppel-und/oder Dreifachbindung je Molekül vorliegt,

(4) durch Hydrosilylierung von Triallylisocyanurat mit Organosiloxan der Formel

$H(CH_3)_2Si[OSi(CH_3)_2]_nH$ ,

worin n eine ganze Zahl im Wert von 1 bis 5 ist, erhältliche Organosiliciumverbindungen,

(5) Silane der Formel

$(R^5C_mH_{2m})_aSi(OR^4)_{4-a}$ (IV),

worin $R^4$ gleiche oder verschiedene einwertige Kohlenwasserstoffreste mit 1 bis 6 Kohlenstoffatomen je Rest, $R^5$ gleiche oder verschiedene Kohlenwasserstoffreste mit 1 bis 20 Kohlenstoffatomen je Rest, die durch mindestens einen Substituenten substituiert sind, der aus folgender Gruppe von Formeln ausgewählt ist:

$-Si(OR^4)_3$

($R^4$ hat die oben dafür angegebene Bedeutung)

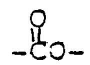

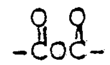

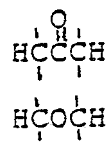

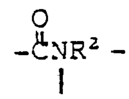

($R^2$ hat die oben dafür angegebene Bedeutung), a eine ganze Zahl im Wert von 1 bis 3 und m eine ganze Zahl im Wert von 1 bis 6 bedeutet und wobei mindestens eine Kohlenstoff-Kohlenstoff-Doppel-und/oder Dreifachbindung je Molekül vorliegt,

(6) Polysiloxane der Formel

$H_2C=CHCOO(CH_2)_3Si(CH_3)_2O_pSi(CH_2)_3OOCH=CH_2$ (V),

worin p eine ganze Zahl im Wert von 1 bis 10 ist,

(7) Dicarbonsäurediallylester der Formel

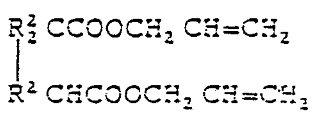 (VI),

worin $R^2$ die oben dafür angegebene Bedeutung hat oder beide an das gleiche Kohlenstoffatom gebundene $R^2$ zusammen einen über Kohlenstoff-Kohlenstoff-Doppelbindung an dieses Kohlenstoffatom gebundenen Kohlenwasserstoffrest darstellen.

US 3 445 420 (ausgegeben 20. Mai 1969, G.J. Kookootsedes et al., Dow Corning),US 4 256 870 (ausgegeben 17. März 1981, R.P. Eckberg, General Electric Company)und US 4 530 989 (ausgegeben 23. Juli 1985, U. Michel et al., Wacker-Chemie GmbH) erwähnen weder Verbindungen der erfindungsgemäß als Zusätze verwendeten Art, noch offenbaren sie, daß die gemäß diesen Druckschriften hergestellten Elastomeren auf den Unterlagen, auf denen sie erzeugt wurden, besonders gut haf ten.

Vorzugsweise enthalten die Reste R 1 bis 10 Kohlenstoffatome je Rest und die Reste Z 3 bis 10 Kohlenstoffatome je Rest. Die Reste R und Z können linear, verzweigt oder cyclisch sein.

Auch die Reste $R^2$ können linear, verzweigt oder cyclisch sein.

Bevorzugte Beispiele für Verbindungen der Formel (I) sind Allylester von 2 bis 10 Kohlenstoffatome je Molekül aufweisenden Monocarbonsäuren, die durch Ethersauerstoff, mindestens eine Ketoxygruppe oder durch mindestens eine Cyangruppe substituiert sind, wie p-Methoxyphenylessigsäureallylester, also die Verbindung der Formel

$p\text{-}CH_3OC_6H_4CH_2COOCH_2CH=CH_2$ ,

3,4-Dimethoxyphenylessigsäureallylester, also die Verbindung der Formel

$3,4\text{-}(CH_3O)_2C_6H_3CH_2COOCH_2CH=CH_2$ ,

Cyanessigsäureallylester, also die Verbindung der Formel

$NCCH_2COOCH_2CH=CH_2$ ,

Acetessigsäureallylester, also die Verbindung der Formel

$CH_3COCH_2COOCH_2CH=CH_2$ , und

Diacetessigsäureallylester, also die Verbindung der Formel

$(CH_3CO)_2CHCOOCH_2CH=CH_2$.

Beispiele für Verbindungen der Formel (I) sind weiterhin Aldehyde mit mindestens einer aliphatischen Kohlenstoff-Koh lenstoff-Doppelbindung, wie Crotonaldehyd, also die Verbindung der Formel

$CH_3CH=CHCHO$ ,

Zimtaldehyd, also die Verbindung der Formel

$C_6H_5CH=CHCHO$

und Hexadienal, also die Verbindung der Formel

$CH_3CH=CHCH=CHCHO$;

und Ketone mit mindestens einer aliphatischen Kohlenstoff-Kohlenstoff-Doppelbindung, wie Benzalaceton, also die Verbindung der Formel

$CH_3COCH=CHC_6H_5$

Anisalaceton, also die Verbindung der Formel

$CH_3COCH=CHC_6H_4\text{-}p\text{-}OCH_3$

die Verbindung der Formel

$CH_3COCH=CHC_6H_4\text{-}o\text{-}OH$ ,

Methylvinylketon, also die Verbindung der Formel

$CH_3COCH=CH_2$ ,

Mesityloxyd, also die Verbindung der Formel

$CH_3COCH=C(CH_3)_2$

und Phoron, also die Verbindung der Formel

$(CH_3)_2C=CHCOCH=C(CH_3)_2$.

Ein weiteres einzelnes Beispiel für eine Verbindung der Formel (I) ist die Verbindung der Formel

$H_2C=CHCONHCH(OCH_3)COOCH_3$.

Die als einzelne Beispiele für Verbindungen der Formel (I) benannten Verbindungen sind alle im Handel erhältlich.

In den Verbindungen der Formel (II) können die $R^2$ gleich oder verschieden sein. Ein bevorzugtes Beispiel für eine Verbindung der Formel (II) ist Allylbernsteinsäureallylimid, also die Verbindung der Formel

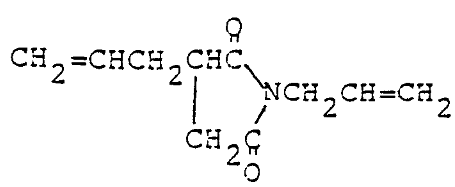

Eine Herstellung von Allylbernsteinsäureallylimid wird weiter unten beschrieben. Ein weiteres Beispiel für eine Verbindung der Formel (II) ist die Verbindung der Formel

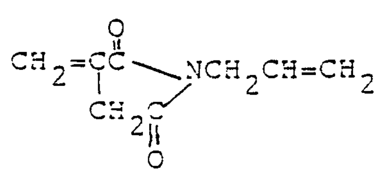

Auch die Reste $R^3$ können linear, verzweigt oder cyclisch sein. Einzelne Beispiele für Verbindungen der

Formel(III) sind 4-Vinylcyclohexenoxyd, also die Verbindung der Formel

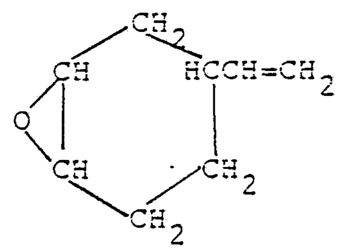

Allylglycidylether, also die Verbindung der Formel

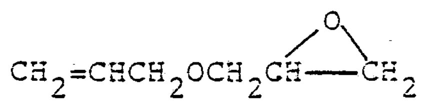 ,

flüssige oligomere Epoxyde der Formel

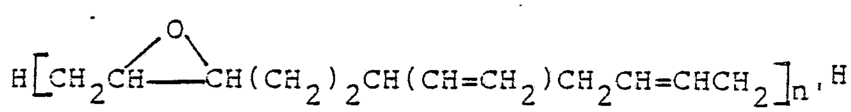 ,

worin n′ eine ganze Zahl im Wert von 1 bis 15, vorzugsweise 5 bis 8 ist, und die Verbindung der Formel

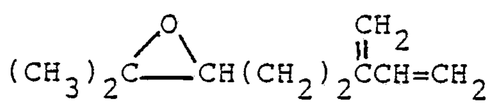 .

Auch die als einzelne Beispiele für Verbindungen der Formel (III) benannten Verbindungen sind alle im Handel erhältlich.

Die durch Hydrosilylierung von Triallylisocyanurat mit Organosiloxan der Formel
$H(CH_3)_2Si[OSi(CH_3)_2]_nH$ ,
worin n eine ganze Zahl im Wert von 1 bis 5 ist, erhältlichen Organosiliciumverbindungen sind vorzugsweise solche der Formel

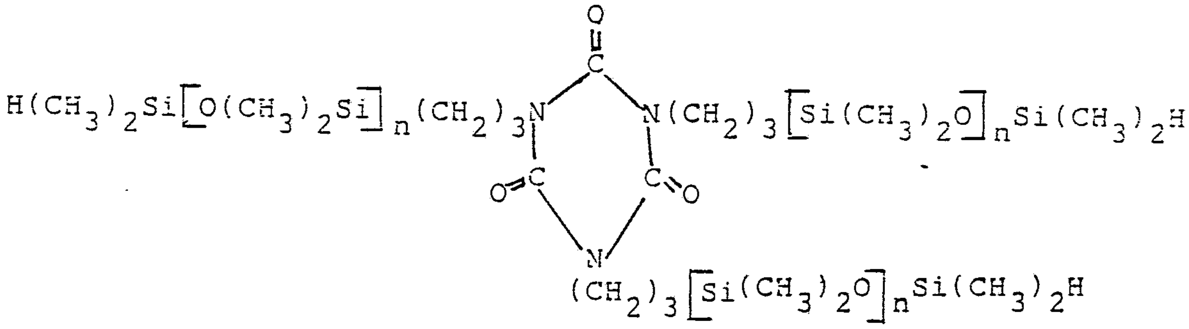

worin n die oben dafür angegebene Bedeutung hat. Vorzugsweise ist n 1 oder 2, insbesondere 1.

Eine Herstellung der Verbindung der vorstehend angegebenen Formel, worin n 1 ist, ist weiter unten beschrieben.

Auch die Reste $R^4$ und $R^5$ können linear, verzweigt oder cyclisch sein. Wegen der leichteren Zugänglichkeit ist als Rest $R^4$ der Methyl-oder Ethylrest bevorzugt. Weiterhin ist bevorzugt, daß Kohlenstoff-Kohlenstoff-Doppel-oder Dreifachbingung(en), wobei Kohlenstoff-Kohlenstoff-Doppelbindung(en) bevorzugt ist bzw. sind, im Rest $R^5$ bzw. den Resten $R^5$ vorliegt bzw. vorliegen.

Einzelne Beispiele für Silane der Formel (IV) sind solche der Formel

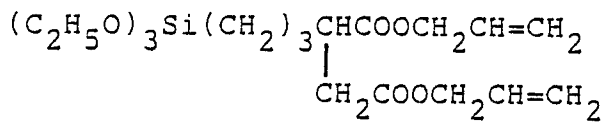 (1)

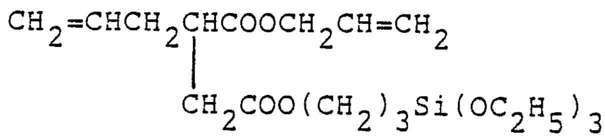 (1a)

und Gemische dieser beiden Silane

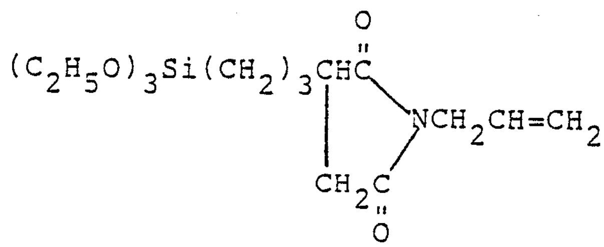 (2)

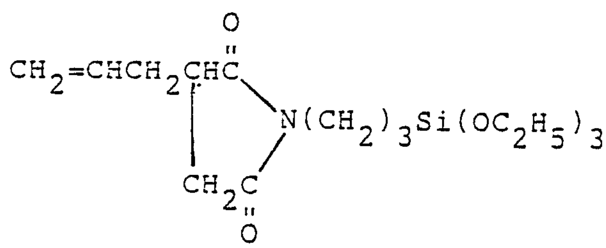 (2a)

und Gemische dieser beiden Silane

$(C_2H_5O)_3Si(CH_2)_3OCH(OCHTMCH = CH_2)CHOCH_2CH = CH_3)_2$

$[(C_2H_5O)_3Si(CH_2)_3O]_2$ $CHCH(OCH_2CH = CH_2)_2$ (4)

$[(C_2H_5O)_3Si(CH_2)_3]_2CHCH[O(CH_2)_3Si(OC_2H_5)_3]OCH_2CH = CH_2$

$H_2C = CHCH_2O[(C_2H_5O)_3Si(CH_2)_3O]CHCH[O(CH_2)_3Si(OC_2H_5)_3]OCH_2CH = CH_2$

(6)

$(C_2H_5O)_3Si(CH_2)_3OOCCH_2CH_2COOCH_2CH = CH_2$ (7)

Silane der Formel

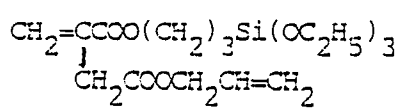 (9)

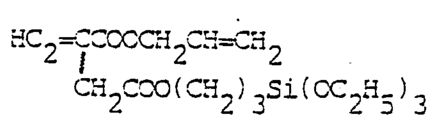 (9a)

und Gemische dieser beiden Silane.

Derartige Silane können durch Anlagerung von Verbindungen der Formel

$HSi(OR^4)_3$ ,

worin $R^4$ die oben dafür angegebene Bedeutung hat, an die Verbindungen der Formeln (1) bis (7) bzw. (9), worin die Gruppe der Formel

$(C_2H_5O)_3Si(CH_2)_3-$

durch die Gruppe der Formel

$H_2C=CHCH_2-$

ersetzt ist, in an sich bekannter Weise hergestellt werden. Vorzugsweise ist p eine ganze Zahl im Wert von 1 bis 4 . Eine Herstellung von Verbindungen der Formel (V) ist in US 4 554 339 (ausgegeben 19. November 1985, F. Hockemeyer et al., Wacker-Chemie GmbH) beschrieben.

Einzelne Beispiele für Dicarbonsäurediallylester der Formel (VI) sind Bernsteinsäurediallylester, Allylbernsteinsäurediallylester und Itaconsäurediallylester.

Die anderen Bestandteile als die oben unter (1) bis (7) definierten Zusätze (a) zur Verbesserung der Haftung der Elastomeren auf den Unterlagen, auf denen sie erzeugt wurden, der bei dem erfindungsgemäßen Verfahren verwendeten Massen können selbstverständlich die gleichen sein, wie sie in den bisher zur Herstellung von Organopolysiloxanelastomeren verwendeten, durch Anlagerung von Si-gebundenem Wasserstoff an SiC-gebundene Vinylgruppen vernetzbaren Massen vorliegen konnten. Die wesentlichen Bestandteile derartiger Massen sind, abgesehen von erfindungsgemäß verwendetem Zusatz (a),

(b) SiC-gebundene Vinylgruppen enthaltende Diorganopolysiloxane, insbesondere solche der Formel

$R^6_2(CH_2=CH)SiO(R^6_2SiO)_xSiR^6_2(CH=CH_2)$ ,

worin $R^6$ gleiche oder verschiedene, von aliphatischen Kohlenstoff-Kohlenstoff-Mehrfachbindungen freie, einwertige, SiC-gebundene organische Reste und x eine ganze Zahl mit einem solchen Wert bedeutet, daß die durchschnittliche Viskosität dieser Diorganopolysiloxane 100 bis $10^6$ mPa.s bei 25°C, insbesondere 200 bis 200 000 mPa.s bei 25°C, beträgt

(c) Verbindungen mit Si-gebundenem Wasserstoff, vorzugsweise lineare, cyclische oder verzweigte Organopolysiloxane aus Einheiten der Formel

$$R^6_zH_ySiO_{\frac{4-y-z}{2}} ,$$

worin $R^6$ die oben dafür angegebene Bedeutung hat, y 0 oder 1, z 0, 1, 2 oder 3 und die Summe von y + z 0, 1, 2 oder 3 ist, mit der Maßgabe,daß je Molekül mindestens 2, vorzugsweise mindestens 3,Si-gebundene Wasserstoffatome vorliegen, und

(d) die Anlagerung von Si-gebundenem Wasserstoff an SiC-gebundene Vinylgruppen fördernder Katalysator.

Auch die Reste $R^6$ können linear, verzweigt oder cyclisch sein. Vorzugsweise enthalten die Reste $R^6$ 1 bis 18 Kohlenstoffatome je Rest. Beispiele für Reste $R^6$ sind Kohlenwasserstoffreste, wie Alkylreste, z.B. der Methyl-, Ethyl-, n-Propyl-, Isopropyl-, n-Butyl-und sec.-Butylrest, sowie Octadecylreste; Cycloalkylreste, wie der Cyclohexylrest und Methylcyclohexylreste; Arylreste, wie der Phenylrest; Alkarylreste, wie Tolylreste; und Aralkylreste, wie der Benzyl-und der beta-Phenylethylrest. Diese Kohlenwasserstoffreste können Substituenten aufweisen, die gegenüber Si-gebundenem Wasserstoff inert sind. Beispiele für derartige substituierte Kohlenwasserstoffreste sind insbeson dere halogenierte Kohlenwasserstoffreste, wie der 3,3,3-Trifluorpropylrest und o-, p-und m-Chlorphenylreste. Schon wegen der leichteren Zugänglichkeit sind jedoch vorzugsweise mindestens 80 % der Anzahl der Reste $R^6$ Methylreste.

Vorzugsweise liegt Si-gebundener Wasserstoff in Mengen von 0,1 bis 15 Si-gebundenen Wasserstoffatomen je SiC-gebundener Vinylgruppe vor.

Als die Anlagerung von Si -gebundenem Wasserstoff an SiC-gebundene Vinylgruppen fördernde Katalysatoren (d) können bei dem erfindungsgemäßen Verfahren beliebige Katalysatoren dieser Art verwendet werden. Beispiele für solche Katalysatoren sind metallisches und feinverteiltes Platin, Ruthenium, Rhodium, Palladium und Iridium,wobei sich diese Metalle jeweils auf festen Trägern, wie Siliciumdioxyd, Aluminiumoxyd oder Aktivkohle, befinden können, und Verbindungen bzw. Komplexe dieser Elemente, wie $PtCl_4$, $H_2PtCl_6 \cdot 6H_2O$, $Na_2PtCl_4 \cdot 4H_2O$, Platin-Olefin-Komplexe, Platin-Alkohol-oder Platin-Alkoholat-Komplexe, Platin-Ether-Komplexe, Platin-Aldehyd-Komplexe, Platin-Keton-Komplexe, einschließlich Umsetzungsprodukten aus $H_2PtCl_6 \cdot 6H_2O$ und Cyclohexanon, Platin-Vinylsiloxan-Komplexe, insbesondere 1,3-Divinyl-1,1,3,3-tetramethyldisiloxan-Komplexe mit oder ohne Gehalt an nachweisbarem anorganisch gebundenem Halogen,

Bis-(gamma-picolin)-platindichlorid, Trimethylenpyridinplatindichlorid, Dicyclopentadienplatindichlorid, Dimethylsulfoxyd-ethylenplatin-(II)-dichlorid, das Umsetzungsprodukt von in 1-Octen gelöstem Platintetrachlorid mit sec.-Butylamin, Tetrakis-(triphenylphosphin)-palladium, Gemische aus Palladiumschwarz und Triphenylphosphin, Verbindungen der Formel

XPtY ,

worin X einen gegebenenfalls substituierten Kohlenwasserstoffrest mit 1 bis 3 aliphatischen Kohlenstoff-Kohlenstoff-Doppelbindung(en), der an das Platinatom durch eine PtC-sigma-Bindung und durch eine Pt-Olefin-pi-Bindung gebunden ist, und Y einen an das Platinatom chelatartig gebundenen beta-Diketonat-Liganden bedeutet (vgl. US 4 177 341, ausgegeben 4. Dezember 1979, G. Kreis et al., Consortium für elektrochemische Industrie GmbH), und Verbindungen der Formel

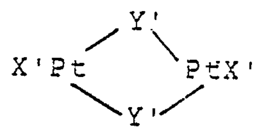
,

worin X′ gleiche oder verschiedene, durch eine Alkoxy-oder Acyloxygruppe substituierte Kohlenwasserstoffreste mit 1 bis 3 aliphatischen Kohlenstoff-Kohlenstoff-Doppelbindung(en), wobei diese Kohlenwasserstoffreste an das Platinatom durch eine PtC-sigma-Bindung und durch Pt-Olefin-pi-Bindung gebunden sind und Y′ gleiche oder verschiedene 2-bindige Brückenliganden bedeutet (vgl. ebenfalls US 4 177 341).

Es kann eine Art von die Anlagerung von Si-gebundenem Wasserstoff an SiC-gebundene Vinylgruppen förderndem Katalysator (d) verwendet werden. Es kann aber auch ein Gemisch aus mindestens zwei verschiedenen Arten derartiger Katalysatoren verwendet werden. Ebenso kann eine Art von Bestandteil (a), aber auch ein Gemisch aus mindestens zwei verschiedenen Arten von Bestandteil (a), eine Art von Bestandteil (b), aber auch ein Gemisch aus mindestens zwei verschiedenen Arten von Bestandteil (b) und - schließlich eine Art von Bestandteil (c), aber auch ein Gemisch aus mindestens zwei verschiedenen Arten von Bestandteil (c) in den bei dem erfindungsgemäßen Verfahren eingesetzten Massen vorliegen.

Wird als die Anlagerung von Si-gebundenem Wasserstoff an SiC-gebundene Vinylgruppen fördernder Katalysator Platin, Platinverbindung bzw. Platinkomplex eingesetzt, so wird derartiger Katalysator vorzugsweise in Mengen von 5 bis 50 Ge wichts-ppm (Gewichtsteilen je Million Gewichtsteilen), berechnet als Element und bezogen auf das Gesamtgewicht der Bestandteile (b) und (c), verwendet.

Erfindungsgemäß verwendeter Zusatz (a) wird vorzugsweise in Mengen von insgesamt 0,01 bis 10 Gewichtsprozent, insbesondere 0,2 bis 5 Gewichtsprozent, jeweils bezogen auf das Gesamtgewicht der Bestandteile (b) und (c) eingesetzt. Beträgt die Menge des Zusatzes (a) weniger als 0,01 Gewichtsprozent, bezogen auf das Gesamtgewicht der Bestandteile (b) und (c), so kann die Haftung der Elastomeren auf den Unterlagen, auf denen sie erzeugt wurden, unbefriedigend gering sein. Beträgt die Menge des Zusatzes (a) mehr als 10 Gewichtsprozent, bezogen auf das Gesamtgewicht der Bestandteile (b) und (c), so kann dadurch die Vernetzungsgeschwindigkeit der Massen in nicht mehr tragbarem Ausmaß erniedrigt werden. Die beste Menge von erfindungsgemäß verwendetem Zusatz (a) kann vom Fachmann durch einfache Handversuche leicht ermittelt werden.

Zusätzlich zu Organopolysiloxan (b) mit SiC-gebundenen Vinylgruppen, Organosiliciumverbindung (c) mit Si-gebundenem Wasserstoff, die Anlagerung von Si-gebundenem Wasserstoff an SiC-gebundene Vinylgruppen förderndem Katalysator (d) und Zusatz (a) können auch bei dem erfindungsgemäßen Verfahren Stoffe, die auch in den bisher bekannten zur Herstellung von Organopolysiloxanelastomeren verwendbaren, durch Anlagerung von Si-gebundenem Wasserstoff an SiC-gebundene Vinylgruppen vernetzbaren Massen zusätzlich zu Organopolysiloxan mit SiC-gebundenen Vinylgruppen, Organosiliciumverbindung mit Si -gebundenem Wasserstoff, und die Anlagerung von Si-gebundenem Wasserstoff an SiC-gebundene Vinylgruppen förderndem Katalysator vorliegen konnten, mitverwendet werden. Beispiele für solche weiteren zusätzlichen Stoffe sind anorganische Füllstoffe mit einer BET-Oberfläche von mindestens $50m^2/g$, wie pyrogen erzeugtes Siliciumdioxyd oder gefälltes Siliciumdioxyd mit einer BET-Oberfläche von mindestens $50m^2/g$, anorganische Füllstoffe mit einer Oberfläche von weniger als $50m^2/g$, wie Quarzmehl, Glasfasern, gefälltes Siliciumdioxyd mit einer BET-Oberfläche von weniger als $50m^2/g$ oder Diatomeenerde, elektrisch leitfähig machende Stoffe, wie Acetylenruß, Pigmente, lösliche Farbstoffe, Weichmacher, Organopolysiloxanharze, wie solche aus Einheiten der Formel $(H_2C{=}CH)R^6_2SiO_{1/2}$ , $R^6_3SiO_{1/2}$ und $SiO_{4/2}$ , wobei $R^6$ jeweils die oben dafür angegebene Bedeutung hat, rein-organische Harze, wie Polyvinylchloridpulver, andere Mittel zur Verbesserung der Haftung der Elastomeren auf den Unterlagen, auf denen sie erzeugt wurden, als erfindungsgemäß verwendeter Zusatz (a) und die Vernetzung verzögernde bzw. regelnde Mittel, wie Maleinsäuremonoallylester, 1-Ethinylcyclohexanol-(1),Benzotriazole oder 1,3-Divinyl-1,1,3,3-tetramethyldisiloxan.

Mindestens ein Teil der anorganischen Füllstoffe mit einer BET-Oberfläche von mindestens $50m^2/g$ und/oder der anorganischen Füllstoffe mit einer BET-Oberfläche von weniger als $50m^2/g$ kann hydrophob sein, weil er z.B. mit Hexamethyldisilazan in Abwesenheit und/oder in Anwesenheit von Bestandteil (b) und/oder Bestandteil (c) behandelt wurde.

Die Herstellung der bei den erfindungsgemäßen Verfahren verwendeten, durch Anlagerung von Si-gebundenem Wasserstoff an SiC-gebundene Vinylgruppen vernetzbaren Massen kann durch Vermischen ihrer Bestandteile nach für die Bereitung von durch Anlagerung von Si-gebundenem Wasserstoff an SiC-gebundene Vinylgruppen vernetzbaren Massen üblichen Verfahren erfolgen. Werden die bei dem erfindungsgemäßen Verfahren eingesetzten, vernetzbaren Massen aus mehr als einer Komponente bereitet, wie es bei schon bei Raumtemperatur vernetzbaren Massen sehr häufig der Fall ist, wobei im allgemeinen eine Komponente Bestandteil (b), und Bestandteil (d), eine weitere Komponenten Bestandteil (c), enthält oder Bestandteil (d) in einer dritten Komponente vorliegt, so ist es gleichgültig, in welcher Komponente Bestandteil (a) vorliegt, oder ob Be standteil (a) in eine Mischung aus der Gesamtheit der übrigen Bestandteile eingemischt wird, solange diese Mischung nicht zu rasch vernetzt.

Bei dem erfindungsgemäßen Verfahren wird die Vernetzung vorzugsweise bei 15° bis 250°C, insbesondere 80° bis 160°C durchgeführt.

Beispiele für Unterlagen, auf denen nach dem erfindungsgemäßen Verfahren Elastomere erzeugt werden können und dann die Elastomeren auf diesen Unterlagen auch ohne vorhergehende Grundierung vielfach gut haften, sind silikatische Stoffe, wie Porzellan, Steingut, Emaille und Glas, Metalle, wie Stahl, Aluminium und Kupfer, sowie Holz und Kunststoffe, wie Polyvinylchlorid, Polycarbonate und glasfaserverstärkte Epoxyharze.

Das erfindungsgemäße Verfahren eignet sich z.B. zum Vergießen oder Einbetten beispielsweise von elektrischen, oder elektronischen oder photovoltaischen Bauelementen, zum Abdichten, zur Erzeugung von Beschichtungen, zum Verkleben,beispielsweise beim Verbinden von Glasplatten oder Platten aus Kunststoff miteinander und zum Isolieren von elektrischen Leitern.

In den folgenden Beschreibungen von bei dem erfindungsgemässen Verfahren verwendbaren Stoffe sowie in den folgenden Beispielen beziehen sich alle Angaben von Teilen und Prozentsätzen auf das Gewicht, soweit nichts anderes angegeben ist. Die Viskositäten sind jeweils bei 23°C gemessen.

a) Herstellung von Allylbernsteinsäurediallylester

In einem mit Rührer, Rückflußkühler und Wasserabscheider ausgestatteten Rundkolben wird eine Gemisch aus 175 g (1,25 Mol) Allylbernsteinsäureanhydrid, 250 g (4,3 Mol) Allylalkohol, 250 ml Chloroform und 12 g p-Toluolsulfonsäure unter Rühren zum Sieden unter Rückfluß erwärmt, bis sich 22 ml Wasser abgeschieden haben. Nach dem Abkühlen wird der Kolbeninhalt in einem Scheidetrichter zunächst mit Wasser, dann mit 5%-iger wäßriger Natriumbicarbonatlösung und schließlich wieder mit Wasser gewaschen und dann über Magnesiumsulfat getrocknet. Nach Abfiltrieren vom Trockenmittel werden Lösungsmittel und überschüssiger Allylalkohol bei 15 hPa (abs.) entfernt. Aus dem Rückstand werden durch Destillation 234 g bei 1,3 hPa (abs.) und 69°bis 70°C siedender Allylbernsteinsäurediallylester erhalten.

b) Herstellung von Allylbernsteinsäureallylimid

Unter Stickstoff werden in einem mit Rührer, Tropftrichter und Rückflußkühler ausgestatteten Rundkolben 140 g (1 Mol) Allylbernsteinsäureanhydrid und 250 ml über metallischem Natrium getrockneter Diethylether vorgelegt und dann mit 75 g (0,95 Mol) Pyridin vermischt. Dann werden unter Rühren 57 g Allylamin in 100 ml über metallischem Natrium getrocknetem Diethylether innerhalb von 2 Stunden tropfenweise in den Kolben gegeben. Nach Beendigung dieser Zugabe wird noch 1 Stunde zum sieden unter Rückfluß erwärmt. Das so erhaltene Gemisch wird in einem Scheidetrichter mit 5 %-iger wäßriger Salzsäure gewaschen, bis die wäßrige Phase einen pH-Wert von 6,5 aufweist. Die organische Phase wird über Magnesiumsulfat getrocknet. Nach dem Abfiltrieren vom Trockenmittel wird bei 15 hPa (abs.) das Lösungsmittel entfernt. Aus dem Rückstand werden durch Destillation 153 g bei 130°C und 0,5 hPa siedendes Allylbernsteinsäureallylimid erhalten.

c) Herstellung von Gemisch aus Silan der Formel

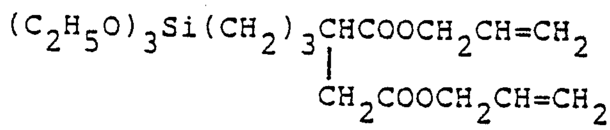 (1)

und Silan der Formel

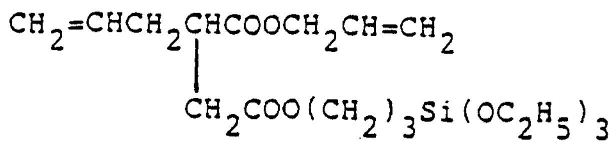 (1a)

Zu einem auf 100°C erwärmtem Gemisch aus 100 g (0,42 Mol) Allylbernsteinsäurediallylester, 1000 ml Toluol und 0,8 ml einer 1% Platin, berechnet als Element, enthaltenden Lösung von Dicyclopentadienplatindichlorid in Dichlormethan in einem mit Rührer, Thermometer, Tropftrichter und Rückflußkühler ausgestattetem Rundkolben werden unter Rühren innerhalb von 4 Stunden 69 g (0.42 Mol) Triethoxysilan in 1000 ml Toluol tropfenweise gegeben, wobei während dieser Zugabe die Temperatur des Kolbeninhalts bei 100°C gehalten wird. Die so erhaltene Mischung wird noch eine Stunde auf 100°C erwärmt, dann auf 70°C gekühlt, mit 0,1 g Aktivkohle vermischt und eine Stunde bei 70°C gerührt. Nach dem Abfiltrieren von der Kohle wird bei 15 hPa (abs.) das Lösungsmittel entfernt. Aus dem Rückstand werden durch Destillation 95 g eines bei 114°C und 1,3 hPa (abs.) siedenden Gemischs aus 1 Teil Silan der Formel (1) und 2 Teilen Silan der Formel (1a) erhalten.

d) Herstellung von Gemisch aus Silan der Formel

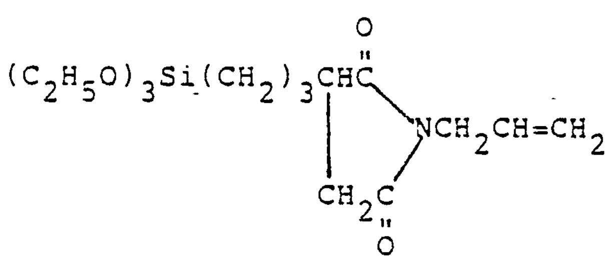 (2)

und Silan der Formel

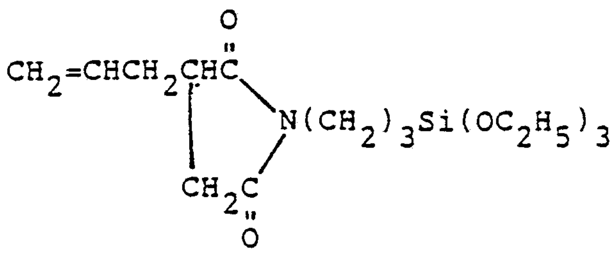
(2a)

Die vorstehend unter c) beschriebene Arbeitsweise wird wiederholt mit den Abänderungen, daß 89 g (0,5 Mol) Allylbernsteinsäureallylimid anstelle der 100 g Allylbernsteinsäurediallylester und 82 g (0,5 Mol) Triethoxysilan anstelle der 69 g Triethoxysilan verwendet werden. Es werden 148 g eines Gemisches aus etwa 1,5 Teilen Silan der Formel (2) und etwa 1 Teil Silan der Formel (2a) erhalten.

e) Herstellung des Silans der Formel

$(C_2H_5O)_3Si(CH_2)_3OCH(OCH_2CH = CH_2)CH(OCH_2CH = CH_3)_2$ (3)

Die oben unter c) beschriebene Arbeitsweise wird wiederholt mit den Abänderungen, daß 127 g (0,5 Mol) Tetraallyloxyethan anstelle der 100 g Allylbernsteinsäurediallylester und 82 g ( 0,5 Mol) Triethoxysilan anstelle der 69 g Triethoxysilan verwendet werden. Es werden 150 g der Verbindung der Formel (3) erhalten.

f) Herstellung des Silans der Formel

$[(C_2H_5O)_3Si(CH_2)_3O]_2CHCH[O(CH_2)_3Si(OC_2H_5)_3]\ OCH_2CH = CH_2$ (5)

Die oben unter c) beschriebene Arbeitsweise wird wiederholt mit den Abänderungen, daß 127 g (0,5 Mol) Tetraallyloxyethan anstelle der 100 g Allylbernsteinsäurediallylester und 246 g (1,5 Mol) Triethoxysilan anstelle der 69 g Triethoxysilan verwendet werden. Es werden 359 g der Verbindung der Formel (5) erhalten

g) Herstellung von Gemisch aus Silan der Formel

$[(C_2H_5O)_3Si(CH_2)_3O]_2\ CHCH(OCH_2CH = CH_2)_2$ (4)

und Silan der Formel

$H_2C = CHCH_2O[(C_2H_5O)_3Si(CH_2)_3O]\ CHCH\ [O(CH_2)_3Si(OC_2H_5)_3]OCH_2CH = CH_2$
(6)

Die oben unter c) beschriebene Arbeitsweise wird wiederholt mit den Abänderungen, daß 127 g (0,5 Mol) Tetraallyloxyethan und anstelle der 100 g Allylbernsteinsäurediallylester 164 g (1 Mol) Triethoxysilan anstelle der 69 g Triethoxysilan verwendet werden. Es werden 276 g eines Gemisches aus den Silanen der Formel (4) und (6) erhalten.

h) Herstellung des Siloxans der Formel

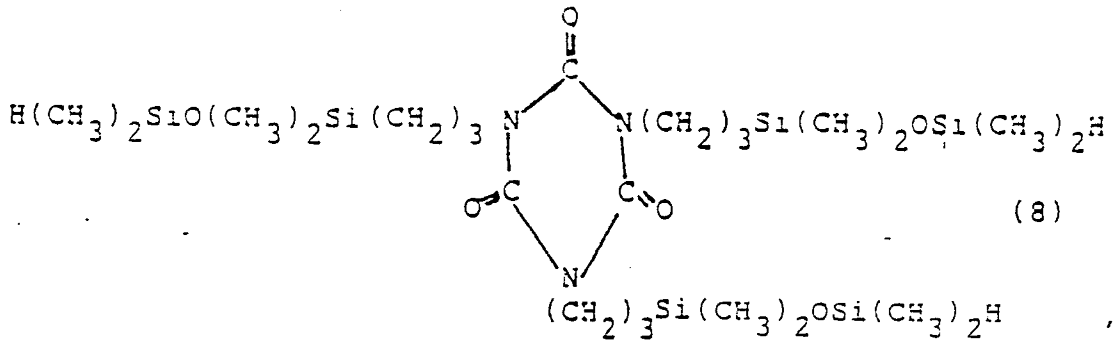

(8)

,

Zu einem auf 110°C erwärmetem Gemisch aus 400 g (3 Mol) 1,1-3,3-Tetramethyldisiloxan, 500 ml Toluol und 2 ml der 1 % Platin, berechnet als Element, enthaltenden Lösung von Dicyclopentadienplatindichlorid in Dichlormethan in einem mit Rückflußkühler, Thermometer, Tropftrichter und Rührer ausgestatteten Rundkolben werden unter Rühren innerhalb von 5 Stunden 126 g (0,5 Mol) Triallylisocyanurat in 1000 ml Toluol tropfenweise gegeben. Die so erhaltene Lösung wird noch eine Stunde auf 110°C erwärmt, dann auf 70°C gekühlt, mit 0,01 g Aktivkohle vermischt und eine Stunden bei 70°C gerührt. nach dem Abfiltrieren von der Kohle wird bei 2 hPa (abs.) das Toluol entfernt. Es bleiben als Rückstand 315 g Siloxan der Formel (8).

i) Herstellung von Itaconsäurediallylester

Die oben unter a) beschriebene Arbeitsweise wird wiederholt mit der abänderung, daß 140 g (1,25 Mol) Itaconsäureanhydrid anstelle der 175 g Allylbernsteinsäureanhydrid eingesetzt werden. Es werden 190 g Itaconsäurediallylester mit einem Siedepunkt von 95°C bei 2 hPa (abs.) erhalten.

k) Herstellung von Gemisch aus Silan der Formel

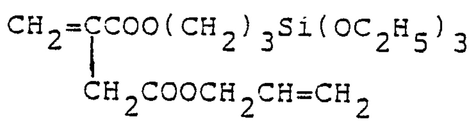

(9)

und Silan der Formel

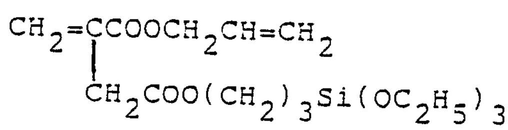

(9a)

Die oben unter c) beschriebene Arbeitsweise wird wiederholt mit der Abänderung, daß 88g (0,42 Mol) Itaconsäurediallylester anstelle der 100 g Allylbernsteinsäurediallylester eingesetzt werden. Es werden 110 g eines bei 129°C und 2 hPa (abs.) siedenden Gemisches aus 1 Teil Silan der Formel (9) und 1 Teil Silan der Formel (9a) erhalten.

I) Herstellung der in den folgenden Beispielen verwendeten Mischung aus Platinkomplex und Verdünnungsmittel

Zu einer Mischung aus 10 Teilen $H_2PtCl_6.6H_2O$, 20 Teilen 1,3-Divinyl-1,1,3,3-tetramethyldisiloxan und 50 Teilen Ethanol werden 20 Teile Natriumbicarbonat gegeben. Das so erhaltene Gemisch wird 30 Minuten unter Rühren zum Sieden unter Rückfluß erwärmt, dann 15 Stunden stehengelassen und danach filtriert. Aus dem Filtrat werden bei etwa 15 hPa (abs.) die bei diesem Druck bis zu 80°C siedenden Bestandteile abdestilliert. Der Rückstand wird in Benzol gelöst. Die Lösung wird filtriert und aus dem Filtrat das Benzol abdestilliert. Der Rückstand wird in Vinyldimethylsiloxygruppen als endständige Einheiten aufweisendem Dimethylpolysiloxan mit einer Viskosität von 1400 mPa.s in solcher Menge gelöst, daß die Lösung 1 % Platin, berechnet als Element, enthält.

Beispiel 1

90 Teile eines Vinyldimethylsiloxygruppen als endständige Einheiten aufweisenden Dimethylpolysiloxans mit einer Viskosität von 1000 mPa.s als Bestandteil (b) werden zunächst mit 0,3 Teilen 1,3-Divinyl-1,1,3,3-tetramethyldisiloxan, dann mit 0,3 Teilen der Mischung aus Platinkomplex und Verdünnungsmittel als Bestandteil (d), dann mit 10 Teilen eines Mischpolymerisates aus Dimethylsiloxan-, Methylhydrogensiloxan-und Trimethylsiloxaneinheiten mit einem Molverhältnis von Dimethylsiloxaneinheiten zu Methylhydrogensiloxaneinheiten von 4:1 und einer Viskosität von 40 mPa.s als Bestandteil (c) und schließlich je 2 Teilen des in der folgenden Tabelle 1 angegebenen Zusatzes (a) zur Verbesserung der Haftung der Elastomeren auf den Unterlagen, auf denen sie erzeugt wurden, vermischt. Proben der zu Elastomeren vernetzbaren Massen, deren Herstellung vorstehend beschrieben wurde, werden auf die in der folgenden Tabelle 1 angegebenen Unterlagen, nachdem diese vorher mit Lösungsmittel entfettet wurden, aufgestrichen und auf diesen Unterlagen durch 1 Stunde Erwärmen auf 150°C vernetzt. Dann wird die Haftfestigkeit der Elastomeren auf den Unterlagen, auf denen sie erzeugt wurden, dadurch geprüft, daß versucht wird, die Elastomeren von den Unterlagen abzuziehen. In der folgenden Tabelle bedeutet

+ = gute Haftung = Kohäsionsriß = Riß im Elastomeren

ø = mittlere Haftung = Kohäsionsriß und Adhäsionsriß = Riß im Elastomeren und Trennung von der Unterlage

– = schlechte Haftung = Adhäsionsriß = Trennung von der Unterlage

Tabelle 1

| Unterlage | keiner | Zusatz a) 1) | 2) | 3) | 4) |
|---|---|---|---|---|---|
| Glas | – | + | – | + | + |
| rostfreier Stahl ($V_2A$) | – | + | + | + | + |
| Aluminium | – | + | + | + | + |
| Kupfer | – | + | + | + | + |
| Hart-Polyvinylchlorid | – | + | + | + | + |
| Polycarbonat | – | – | – | – | + |
| glasfaserverstärktes Epoxyharz | – | + | + | + | + |

1) Diacetessigsäureallylester

2) flüssiges oligomeres Epoxyd der Formel

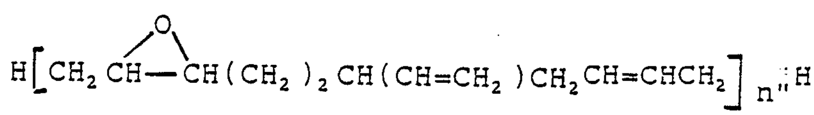

n" = 5 bis 8

3) Organosiloxan, das wie oben unter h) beschrieben hergestellt wurde

4) Silangemisch, das wie oben unter d) beschrieben hergestellt wurde.

Beispiel 2

70 Teile eines Vinyldimethylsiloxygruppen als endständige Einheiten aufweisenden Dimethylpolysiloxans mit einer Viskosität von 15 000 mPa.s als Bestandteil (b) werden zunächst mit 30 Teilen eines benzollöslichen Organopolysiloxanharzes aus 55 Molprozent $SiO_{4/2}$-Einheiten, 6 Molprozent Vinyldimethylsiloxaneinheiten und 39 Molprozent Trimethylsiloxaneinheiten, dann mit 0,3 Teilen der Mischung aus Platinkomplex und Verdünnungsmittel als Bestandteil (d), dann mit 10 Teilen eines Mischpolymerisates aus Dimethylsiloxan-, Methylhydrogensiloxan-und Trimethylsiloxaneinheiten mit einem Molverhältnis von Dimethylsiloxaneinheiten zu Methylhydrogensiloxaneinheiten von 2:1 und einer Viskosität 50 mPa.s als Bestandteil (c) und schließlich mit 1 bzw. 2 Teilen des in der folgenden Tabelle 2 angegebenen Zusatzes (a) vermischt. Die so erhaltenen zu Elastomeren vernetzbaren Massen werden, wie in Beispiel 1 beschrieben, weiterbehandelt. Die Ergebnisse sind in Tabelle 2 angegeben.

Tabelle 2

| Unterlage | keiner | Zusatz a) 1) | 2) | 3) | 4) |
|---|---|---|---|---|---|
| Glas | - | + | + | + | + |
| rostfreier Stahl ($V_2A$) | - | + | + | + | + |
| Aluminium | - | + | + | + | + |
| Kupfer | - | + | + | + | + |
| Hart-Polyvinylchlorid | - | ∅ | + | + | + |
| Polycarbonat | - | + | + | + | - |
| glasfaserverstärktes Epoxyharz | - | + | + | + | + |

1) 2 Teile Diacetessigsäureallylester
2) 2 Teile flüssiges oligomeres Epoxyd der in Zusammenhang mit Tabelle 1 angegebenen Formel
3) 1 Teil Allylbernsteinsäurediallylester
4) 1 Teil Silangemisch, das wie obne unter C) beschrieben hergestellt wurde.

Beispiel 3 und Vergleichsversuch

100 Teile eines Vinyldimethylsiloxygruppen als endständige Einheiten aufweisenden Dimethylpolysiloxanes mit einer Viskosität von 5000 mPa.s als Bestandteil (b) werden zunächst mit 0,5 Teilen 1,3-Divinyl-1,1,3,3-tetramethyldisiloxan, dann mit 30 Teilen eines durch Behandlung mit Dimethyldichlorsilan hydrophobierten pyrogen erzeugten Siliciumdioxyds mit einer BET-Oberfläche von 200 $m^2/g$, dann mit 20 g Quarzmehl mit einer durchschnittlichen Korngröße von 10 mikrometer und dann mit 0,3 Teilen der Mischung aus Platinkomplex und Verdünnungsmittel als Bestandteil (d) vermischt. 90 Teile der so erhaltenen Mischung werden zunächst mit 10 Teilen einer Mischung aus 6 Teilen des in Beispiel 1 näher bezeichneten Mischpolymerisates mit Si-gebundenem Wasserstoff als Bestand teil (c) und 4 Teilen des Vinyldimethylsiloxygruppen als endständige Einheiten aufweisenden Dimethylpolysiloxans mit einer Viskosität von 5000 mPa.s als weiteren Anteil von Bestandteil (b) und schließlich mit 1 bis 2 Teilen des in der folgenden Tabelle 3 angegebenen Zusatzes (a) vermischt. Die so erhaltenen, zu Elastomeren vernetzbaren Massen werden, wie in Beispiel 1 beschrieben, weiterbehandelt. Die Ergebnisse sind in Tabelle 3 angegeben.

Tabelle 3

| Unterlage | Zusatz (a) keiner | 1) | 2) | 3) | 4) | 5) | 6) | 7) |
|---|---|---|---|---|---|---|---|---|
| Glas | - | + | ø | + | + | + | + | - |
| rostfreier Stahl ($V_2A$) | - | + | + | + | + | + | + | - |
| Aluminium | - | + | + | + | + | + | + | - |
| Kupfer | - | + | + | + | + | + | + | - |
| Hart-Polyvinylchlorid | - | + | - | + | + | + | + | - |
| Polycarbonat | - | - | + | - | - | - | + | - |
| glasfaserverstärktes Epoxyharz | - | + | + | + | + | + | + | + |

1) 2 Teile Diacetessigsäureallylester
2) 1 Teil Allylbernsteinsäureallylimid
3) 2 Teile 4-Vinylcyclohexenoxyd
4) 2 Teile flüssiges oligomeres Epoxyd der Formel

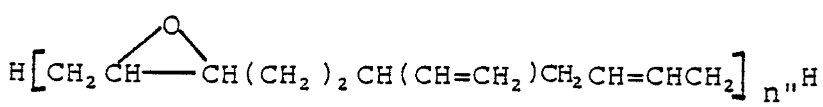

n" = 5 bis 8

5) 1 Teil Organosilan, das wie oben unter e) beschrieben, hergestellt wurde,
6) 2 Teile des Organopolysiloxans der Formel
$H_2C=CHCOO(CH_2)_3[Si(CH_3)_2O]_2Si(CH_3)_2(CH_2)_3OOCCH=CH_2$
7) 2 Teile des Organosiloxans der Formel
$H_2C=C(CH_3)COO(CH_2)_3Si(CH_3)_2OSi(CH_3)_2(CH_2)_3OOCC(CH_3)=CH_2$
im Einklang mit CA 11 80 482 als Vergleichsversuch.

Beispiel 4

Die in Beispiel 3 beschriebene Arbeitsweise wird wiederholt mit den Abänderungen, daß die Vernetzung nicht durch 1 Stunde Erwärmen und die Prüfung der Haftung der Elastomeren auf den Unterlagen, auf denen sie erzeugt wurden, mehr oder weniger unmittelbar nach dem Abkühlen der Elastomeren auf Raumtemperatur erfolgt, sondern daß die Vernetzung durch Belassen der Massen auf den Unterlagen bei 23°C und die Prüfung der haftung 7 Tage nach dem Auftragen der Massen auf die Unterlagen erfolgt. Die Ergebnisse sind in Tabelle 4 angegeben.

Tabelle 4

| Unterlage | keiner | Zusatz (a) 1) | 2) |
|---|---|---|---|
| Glas | - | + | + |
| rostfreier Stahl ($V_2A$) | - | + | + |
| Aluminium | - | - | + |

1) 2 Teile p-Methoxyphenylessigsäureallylester
2) 2 Teile Diacetessigsäureallylester

**Ansprüche**

1. Verfahren zur Herstellung von Organopolysiloxanelastomeren durch Vernetzen von durch Anlagerung von Si-gebundenem Wasserstoff an SiC-gebundene Vinylgruppen vernetzbaren Massen, die einen Zusatz (a) zur Verbesserung der Haftung der Elastomeren auf den Unterlagen, auf denen sie erzeugt wurden, enthalten,
**dadurch gekennzeichnet,**
daß diese Massen als mindestens einen Teil eines derartigen Zusatzes (a) mindestens eine Verbindung enthalten, die aus folgender Gruppe von Verbindungen ausgewählt ist:
(1) Verbindungen der Formel

$R\overset{\overset{O}{\|}}{C}Z$ (I),

worin R ein einwertiger Kohlenwasserstoffrest mit 1 bis 20 Kohlenstoffatomen je Rest ist und Z die gleiche Bedeutung wie R hat oder Wasserstoff oder die Gruppe -OR bedeutet, wobei R die vorstehend dafür angegebene Bedeutung hat, wobei in diesen Verbindungen je Molekül mindestens eine aliphatische Kohlenstoff-Kohlenstoff-Doppelbindung vorliegt, während andere aliphatische Kohlenstoff-Kohlenstoff-Bindungen als aliphatische Kohlenstoff-Kohlenstoff-Doppelbindungen einfache Bindungen sind, und wenn Z nicht Wasserstoff ist oder nicht die gleiche Bedeutung wie R hat, die Kohlenwasserstoffreste R und/oder Z als Substituenten mindestens eine solchen aufweisen, der aus folgender Gruppe von Formeln ausgewählt ist:

$$-\overset{\overset{O}{\|}}{C}O\overset{\overset{O}{\|}}{C}-$$

$$-H\underset{|}{C}\overset{\overset{O}{\|}}{C}\underset{|}{C}H-$$

$-HCOCH-$

$-HCOH$

$-CN$

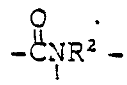

($R^2$ = Wasserstoff oder einwertiger Kohlenwasserstoffrest mit 1 bis 20 Kohlenstoffatomen je Rest)

(2) Verbindungen der Formel

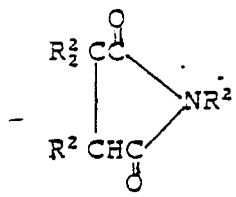

(II),

worin $R^2$ die oben dafür angegebene Bedeutung hat, oder beide an das gleiche Kohlenstoffatom gebundene $R^2$ zusammen einen über eine Kohlenstoff-Kohlenstoff-Doppelbindung an dieses Kohlenstoffatom gebundenen Kohlenwasserstoffrest darstellen.

(3) Verbindungen der Formel

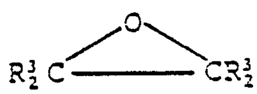

(III),

worin $R^3$ Wasserstoff oder gleiche oder verschiedene Kohlenwasserstoffreste bedeutet, die zweiwertig sind, wenn sie miteinander einen Ring bilden, und sonst einwertig sind, und die durch mindestens einen Substituenten substituiert sein können, der aus folgender Gruppe von Formeln ausgewählt ist:

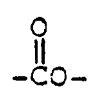

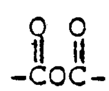

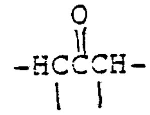

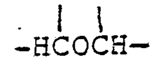

$-CN$

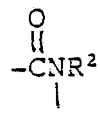

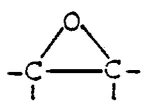

$-Cl$

$-F$

$-Br$

$-J$

($R^2$ hat die oben dafür angegebene Bedeutung) und wobei mindestens eine Kohlenstoff-Kohlenstoff-Doppelbindung und/oder Dreifachbindung je Molekül vorliegt,

(4) durch Hydrosilylierung von Triallylisocyanurat mit Organosiloxan der Formel

$H(CH_3)_2Si[OSi(CH_3)_2]_nH$ ,

worin n eine ganze Zahl im Wert von 1 bis 5 ist, erhältliche Organosiliciumverbindungen,

(5) Silane der Formel

$(R^5C_mH_{2m})_aSi(OR^4)_{4-a}$ (IV),

worin $R^4$ gleiche oder verschiedene einwertige Kohlenwasser stoffreste mit 1 bis 6 Kohlenstoffatomen je Rest, $R^5$ gleiche oder verschiedene einwertige Kohlenwasserstoffreste mit 1 bis 20 Kohlenstoffatomen je Rest, die durch mindestens einen Substituenten substituiert sind, der aus folgender Gruppe von Formeln ausgewählt ist:

$-Si(OR^4)_3$ ($R^4$ hat die oben dafür angegebene Bedeutung)

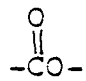

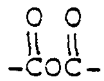

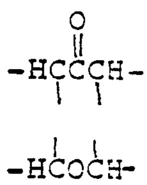

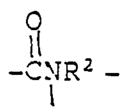

($R^2$ hat die oben dafür angegebene Bedeutung) a eine ganze Zahl im Wert von 1 bis 3 und m eine ganze Zahl im Wert von 1 bis 6 bedeutet und wobei mindestens eine Kohlenstoff-Kohlenstoff-Doppel-und/oder Dreifachbindung je Molekül vorliegt,

(6) Polysiloxane der Formel

$H_2C=CHCOO(CH_2)_3Si(CH_3)_2O_pSi(CH_2)_3OOCH=CH_2$ (V),

worin p eine ganze Zahl im Wert von 1 bis 10 ist,

(7) Dicarbonsäurediallylester der Formel

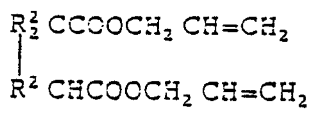 (VI),

worin $R^2$ die oben dafür angegebene Bedeutung hat oder beide an das gleiche Kohlenstoffatom gebundene $R^2$ zusammen einen über Kohlenstoff-Kohlenstoff-Doppelbindung an dieses Kohlenstoffatom gebundenen Kohlenwasserstoffrest darstellen.

2. Verfahren nach Anspruch 1,

**dadurch gekennzeichnet,**

daß als Verbindung der Formel (I) Diacetessigsäureallylester oder p-Methoxyphenylessigsäureallylester verwendet wird.

3. Verfahren nach Anspruch 1,

**dadurch gekennzeichnet,**

daß als Verbindung der Formel (II) Allylbernsteinsäureallylimid verwendet wird.

4. Verfahren nach Anspruch 1,

**dadurch gekennzeichnet,**

daß als Verbindung der Formel (III) 4-Vinylcyclohexenoxyd oder eine Verbindung der Formel

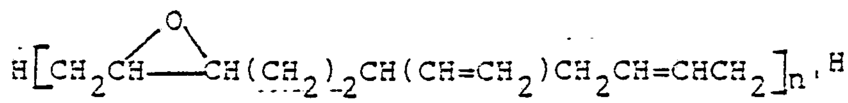,

worin n′ eine ganze Zahl im Wert von 1 bis 15 ist, verwendet wird.

5. Verfahren nach Anspruch 1,
**dadurch gekennzeichnet,**
daß als durch Hydrosilylierung von Triallylisocyanurat erhältliche Organosiliciumverbindung solche der Formel

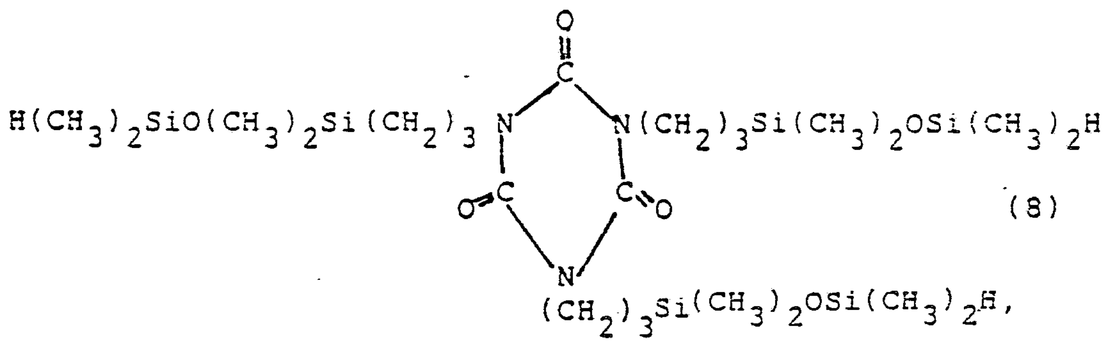

(8)

verwendet wird.

6. Verfahren nach Anspruch 1,
**dadurch gekennzeichnet,**
daß als Zusatz (a) der Formel (IV) ein Gemisch aus Silan der Formel

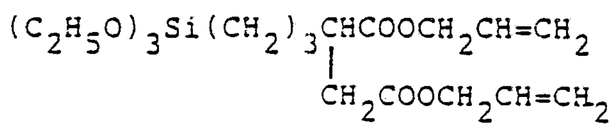

und Silan der Formel

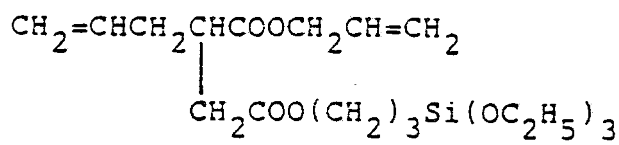

oder das Silan der Formel
$(C_2H_5O)_3Si(CH_2)_3OCH(OCH_2CH=CH_2)CH(OCH_2CH=CH_3)_2$
verwendet wird.

7. Verfahren nach Anspruch 1,
**dadurch gekennzeichnet,**
daß als Polysiloxan der Formel (V) solches der Formel
$H_2C=CHCOO(CH_2)_3[Si(CH_3)_2O]_pSi(CH_3)_2(CH_2)_3OOCH=CH_2$
worin p′ 2 oder 3 ist, verwendet wird.

8. Verfahren nach mindestens einem der Ansprüche 1 bis 6,
**dadurch gekennzeichnet,**
daß Zusatz (1), (2), (3), (4), (5), (6) oder (7) oder ein Gemisch aus mindestens 2 solcher Zusätze in Mengen von jeweils, bzw. insgesamt 0,01 bis 10 Gewichts-prozent, bezogen auf das Gesamtgewicht von Si-gebundener Wasserstoff enthaltender Verbindung und SiC-gebundene Vinylgruppen enthaltendem Diorganopolysiloxan, in den zu vernetzenden Massen vorliegt.

9. Organosiliciumverbindungen der Formel

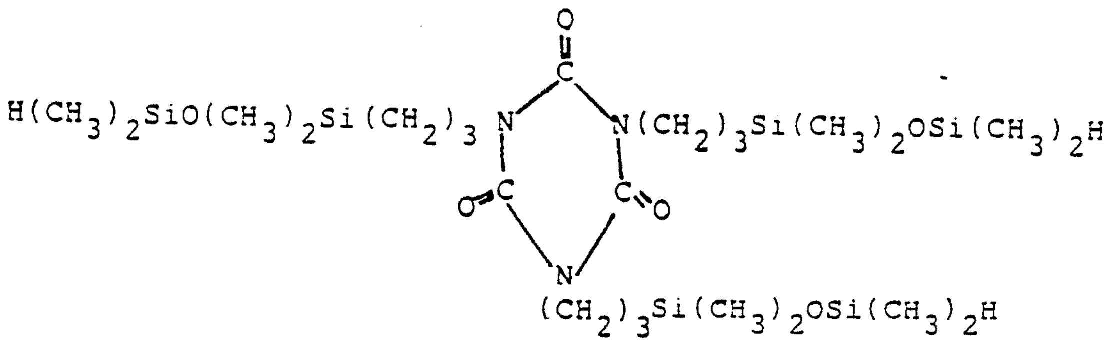

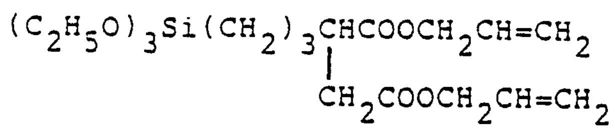

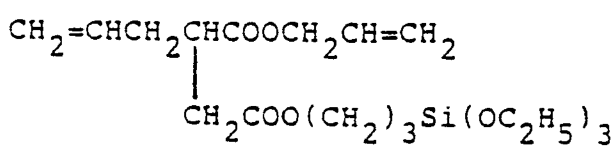

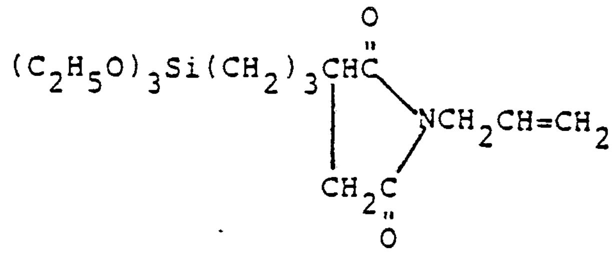

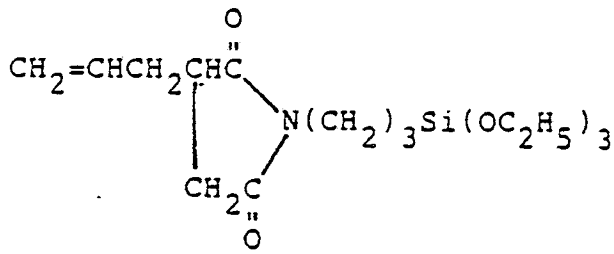

$(C_2H_5O)_3Si(CH_2)_3OCH(OCH_2CH{=}CH_2)CH(OCH_2CH{=}CH_3)_2$

$\left[(C_2H_5O)_3Si(CH_2)_3O\right]_2\ CHCH(OCH_2CH{=}CH_2)_2$

$\left[(C_2H_5O)_3Si(CH_2)_3O\ \right]_2CHCH\left[O(CH_2)_3Si(OC_2H_5)_3\right]\ OCH_2CH{=}CH_2$

$H_2C{=}CHCH_2O\left[\ (C_2H_5O)_3Si(CH_2)_3O\right]\ CHCH\left[\ O(CH_2)_3Si(OC_2H_5)_3\right]OCH_2CH{=}CH_2$

$(C_2H_5O)_3Si(CH_2)_3OOCCH_2CH_2COOCH_2CH{=}CH_2$